# DEMANDE DE BREVET EUROPEEN

(11) **EP 0 893 061 A1**
(43) Date de publication de la demande: **27.01.1999**
(21) Numéro de dépôt: 97420116.2
(22) Date de dépôt: 15.07.1997
(51) Int. Cl.: A21D 13/00

(54) **Mets de restauration rapide**

(71) Demandeur: Libertine's au Four d'Eugenie Sàrl, 74100 Annemasse (FR)
(72) Inventeur: Richeux, Jackie, 74100 Annemasse (FR)
(74) Mandataire: Moinas, Michel

(57) **Abrégé**

L'invention est relative à un mets de restauration rapide basé sur un pain (10) contenant une garniture (30). Notamment, les parois d'une cavité interne ménagée au centre du pain sont tapissées de fromage à pâte fondue (20,25) pour isoler de manière étanche une garniture humide logée dans cette cavité. De préférence, le fromage à pâte fondue (20,25) est fabriqué dans la région de la Savoie sous la dénomination "Raclette". La garniture (30) peut alors être une spécialité avec une sauce, telle qu'un émincé de poulet, un boeuf bourguignon ou une ratatouille.

## Description

La présente invention est relative à un mets de restauration rapide, et plus particulièrement à un pain fourré d'une garniture interne. Ces mets sont appréciés des personnes désireuses de se restaurer rapidement, debout ou assis, en tenant l'aliment avec les mains.

On connaît les sandwichs, "pain bagnat" et autres hamburgers composés de deux tranches de pain entre lesquelles on insère une garniture, soit composée de manière simple d'une ou plusieurs tranches de jambon, saucisson ou fromage, soit composée de manière plus élaborée de couches successives de salade, oignon, viande ou autres. Le goût peut être rehaussé par du beurre étalé sur les faces internes du pain, ou par une sauce à salade, ou jus de viande humidifiant les aliments.

Pratiques, ces mets présentent toutefois des inconvénients. Lorsque l'on entame et écrase l'un des côtés d'un sandwich, qui est épais à cause d'une garniture généreuse insérée dans un pain croustillant, il est fréquent que le côté opposé s'ouvre par basculement de l'une des tranches de pain par rapport à l'autre. Une partie de la garniture peut alors tomber et devenir inconsommable.

Par ailleurs, si la sauce est trop liquide, elle se déplace vers le bord inférieur du sandwich tenu normalement à l'oblique lors de sa consommation. La sauce goutte à partir de ce bord inférieur tachant les vêtements du consommateur. Ceci est particulièrement vrai pour certains hamburgers comprenant plusieurs couches de viande, de mayonnaise ou de sauce tomate, obligeant le consommateur à se pencher très en avant pour éviter tout désagrément. Le choix de la garniture est donc souvent limité à des préparations dites "sèches".

Le document JP 58081738 décrit une pizza constituée d'une base de pain recouverte d'une couche de fromage sur la face supérieure de laquelle est disposée une garniture comprenant des morceaux d'oignon, de champignon, de jambon ou autres. Pour éviter la dégradation du goût et de l'apparence de cette garniture, celle-ci est recouverte d'un film fin de fromage fusionnant avec la couche intermédiaire, cette garniture devant en quelque sorte intégrée dans le fromage.

Toutefois, compte-tenu de la faible épaisseur du film supérieur de fromage, la garniture ne peut être constituée que d'aliments "solides", ce qui en restreint notablement l'éventail du choix. De plus, une telle pizza ne peut être cuite que dans un four, ce qui est trop long pour un mets de restauration rapide devant pouvoir être livré rapidement.

Le but de la présente invention est un mets de restauration rapide basé sur un pain contenant une garniture que l'on puisse consommer sans risque, et ce quand bien même la garniture est "humide", c'est-à-dire comprenant une sauce liquide. Le procédé de réalisation doit toutefois rester simple pour pouvoir être effectué au dernier moment selon le choix du consommateur. De préférence, ce procédé ne doit impliquer que des composants comestibles et courants dans le commerce.

Ces buts sont réalisés du fait que les parois d'une cavité interne ménagée au centre du pain sont tapissées de fromage à pâte fondue pour isoler de manière étanche une garniture humide logée dans cette cavité.

De préférence, le procédé de réalisation de ce mets comprend les étapes suivantes :
- découper un couvercle dans la face supérieure d'un pain partiellement cuit, et ce en préservant un bord continu périphérique,
- ménager une cavité au centre du pain,
- déposer sur le fond et contre les bords latéraux de la cavité interne des lamelles de fromage à pâte fondue,
- remplir la cavité ainsi tapissée avec une garniture,
- couvrir de bord à bord le dessus de la garniture avec des lamelles de fromage à pâte fondue, puis fermer le pain en replaçant le couvercle, et
- cuire le mets à une température comprise entre 130°C et 190°C pendant une durée comprise entre 2 et 6 minutes.

De préférence, on utilise un fromage à pâte fondue fabriqué dans la région de la Savoie sous la dénomination "Raclette", ce fromage se ramollissant à une température adéquate, et son goût se mariant bien avec une multitude de garnitures. Avantageusement, l'épaisseur respectivement du couvercle et du fond de la cavité est comprise entre 5 à 15 millimètres de pain partiellement cuit.

De manière étonnante, on constate alors que le fromage judicieusement chauffé ne se dilue absolument pas ni dans le pain, ni dans la garniture même humide, mais se ramollit juste assez pour créer une paroi étanche séparant efficacement le pain de la sauce de la garniture. De plus, le fromage fondu réalise une soudure le long du bord du couvercle le fixant de nouveau au pain. En d'autres termes, le fromage fondu réalise une enveloppe étanche isolant la sauce qui ne peut plus imbiber le pain au risque d'altérer sa consistance. Ces performances sont optimisées lorsque l'on utilise un pain partiellement cuit d'épaisseur initiale d'environ 2 centimètres.

La garniture peut dans ce cas être très humide, et on peut alors oser des recettes inhabituelles pour des sandwichs, à savoir : une spécialité avec une sauce, telle qu'un émincé de viande de poulet, d'agneau ou autres, un boeuf bourguignon ou une ratatouille ; une choucroute cuite dans du vin blanc accompagnée de charcuterie ; ou une purée de légumes et de viandes selon une recette mexicaine.

Avantageusement, les parois internes de la cavité et du couvercle sont préalablement enduites de beurre avant dépôt des lamelles de fromage à pâte fondue. Ce beurre fondant en premier, il mouille la zone adjacente du pain, ce qui favorise la prise ultérieure du fromage.

Avantageusement, le pain est circulaire, et la cuisson est réalisée entre deux plaques rondes chauffantes en contact avec le couvercle et le fond, et ce à une température comprise entre 150°C et 170°C pendant 2 à 5 minutes. A l'inverse d'un pain longiligne, cette forme facilite la création de la cavité centrale. De plus, le matériel de cuisson adapté est courant dans le commerce, et transmet correctement la chaleur sur toute la surface utile.

Cette cuisson finale rapide du mets permet de fondre juste suffisamment l'enveloppe de fromage, et d'achever simultanément la cuisson des faces externes du pain. Ce pain présente alors une forme circulaire aplatie se rapprochant d'une galette fourrée, mais dont les faces supérieure et inférieure sont croustillantes avec une belle couleur brune appétissante. Cette cuisson permet également de réchauffer la garniture interne.

L'invention sera mieux comprise à l'étude d'un mode de réalisation d'un mets pris à titre d'exemple nullement limitatif et illustré dans les figures annexées dans lesquelles :
- la figure 1 est une vue en coupe du mets lors de son assemblage,
- la figure 2 est une vue en coupe du mets assemblé avant cuisson, et
- la figure 3 est une vue en coupe du mets après cuisson.

Le mets de restauration rapide est basé sur un pain 10 dont la pâte est développée dans une chambre de pousse puis partiellement cuite. Ce pain se présente alors sous une forme circulaire de diamètre compris entre 15 et 25 cm et d'épaisseur comprise entre 2 et 3 cm, les faces extérieures étant encore d'une couleur blanche laiteuse.

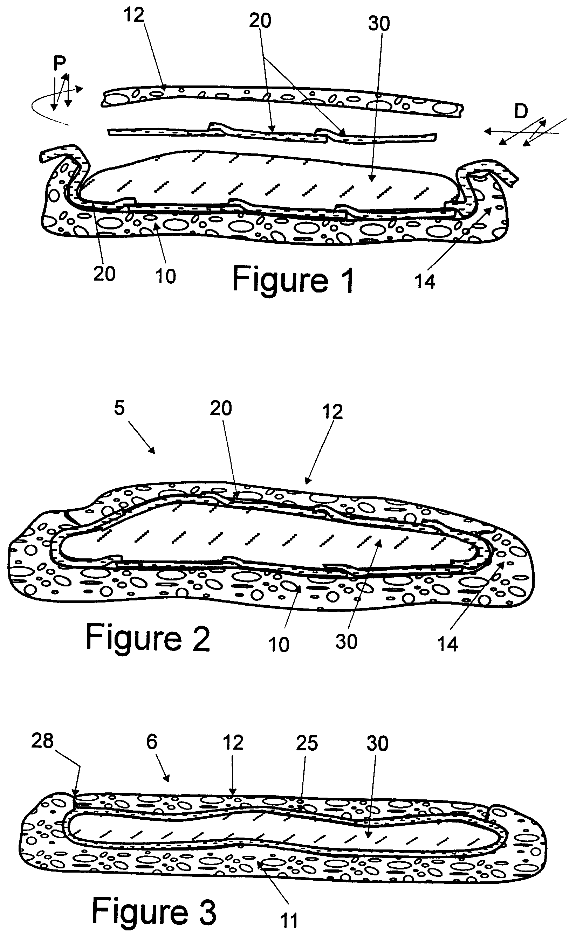

Comme illustré sur la figure 1, on effectue d'abord une coupe verticale circulaire dans la face supérieure du pain 10 selon un mouvement P, c'est-à-dire que l'on manipule un couteau de telle sorte que sa pointe effectue un mouvement oscillant vertical tout en progressant en un mouvement de translation circulaire en restant environ à 1 cm à l'intérieur de cette face supérieure pour préserver un bord périphérique continu 14. Puis, dans un second temps, en manipulant le couteau en translation dans un plan horizontal toujours selon un mouvement oscillant D, on sépare un couvercle 12 du pain 10.

On ménage alors à l'intérieur du pain 10 une cavité, de préférence en comprimant vers le fond la mie interne pour conserver au pain 10 la totalité de sa valeur nutritive. Si on préfère à l'inverse un mets allégé, on peut également créer la cavité interne par enlèvement de la mie en laissant toutefois un fond d'épaisseur minimum de l'ordre de 5 à 8 mm.

De préférence, le fond et les faces latérales internes du pain 10, ainsi que la face interne du couvercle 12 sont enduits préalablement de matière grasse, notamment de beurre ou de margarine.

Comme bien visible sur la figure 1, le fond et les bords internes latéraux du pain 10 sont ensuite tapissés au moyen d'une première série inférieure de lamelles 20 de fromage à pâte fondue, les bords se superposant pour créer ainsi une couche absolument continue. Parmi les fromages à pâte fondue utilisables, on peut mentionner ceux commercialisés sous les dénominations "Gruyère", "Emmental", ou "Reblochon", voire tout autre fromage à pâte fondue fabriqué de manière industrielle et commercialisé sous différentes marques de fantaisie. Toutefois, après de nombreux essais, il s'est avéré que le fromage fabriqué dans la région française de Savoie sous la dénomination "Raclette" est le mieux adapté à la réalisation du mets selon l'invention du fait que son goût se marie très bien à d'autres ingrédients.

Dans la cavité à bords périphériques 14 ainsi tapissée de lamelles 20 de fromage à pâte fondue, on peut alors déposer toutes sortes de garnitures 30 aussi bien sèches qu'humides. Par garniture sèche, on entend de simples tranches de jambon, charcuterie ou légumes crus. Le pain 10 ainsi préparé selon l'invention est toutefois plus particulièrement original dans la mesure où on peut y déposer une garniture dite humide, c'est-à-dire comprenant une sauce liquide. Cette garniture 30 peut être de la salade chargée en sauce vinaigrette, ou autre sauce à salade liquide à l'"Emmental" ou de mayonnaise. Mieux, on peut envisager comme garniture 30 une préparation riche en sauce telle qu'un émincé à la crème de volaille, de boeuf ou d'agneau ; ou une ratatouille ; ou un boeuf bourguignon ; ou une choucroute cuite dans de la graisse ou du vin blanc accompagnée de charcuterie ; voire même une purée de légumes ou de fèves telle qu'un "Chili con carne" mexicain. Plusieurs préparations en sauce sont ainsi cuisinées quelques heures auparavant puis conservées de préférence au bain-marie à une température modérée, de telle sorte à pouvoir être utilisées au dernier moment selon le choix du consommateur.

Comme illustré sur la figure 2, on dépose ensuite par-dessus la garniture 30 une seconde série supérieure de lamelles de fromage 20 en prenant toujours garde que les bords se recouvrent entre eux et se recouvrent également avec les lamelles de la première série inférieure. Le couvercle de pain 12 peut alors être remis en place par-dessus les lamelles supérieures 20, le mets retrouvant alors pratiquement sa forme initiale, légèrement plus épais de par la présence de la garniture. A ce stade, bien que consommable, le mets est beaucoup trop souple et fade pour être intéressant à déguster.

Plus particulièrement selon l'invention, le mets 5 assemblé est déposé sur une première plaque chaude inférieure fixe, puis une seconde plaque chaude supérieure est abaissée contre la face supérieure du couvercle 12. Ce mets est alors cuit pendant 2 à 5 minutes à une température comprise entre 150 et 170°C. Le fond du pain 10 et le couvercle 12 présentant une épaisseur inférieure à 8 mm, la chaleur dégagée par les plaques chaudes et transmise par conduction achève la cuisson du pain 10 et, simultanément, ramollit les lamelles de fromage 20 et réchauffe la garniture 30.

Comme illustré sur la figure 3, le fromage chauffé s'est alors transformé en une enveloppe 25 séparant de manière absolument étanche la garniture chaude 30 du pain développé 11. Simultanément, le fromage fondu a réalisé une soudure 28 sur toute la périphérie du couvercle 12 faisant que ce couvercle ne peut plus s'ouvrir de manière intempestive. Entre les plaques horizontales circulaires de cuisson, le mets cuit 6 se présente alors plutôt sous la forme d'une plaque circulaire à faces supérieure et inférieure sensiblement planes. De par la cuisson, ces faces supérieure et inférieure sont notamment devenues croustillantes en prenant une belle couleur brune dorée appétissante.

La plaque chauffante supérieure est généralement lisse donnant un aspect homogène au mets final. Toutefois, si désiré, la plaque supérieure peut présenter des reliefs parallèles ou selon un motif, laissant alors sur la face supérieure du couvercle 12 une marque décorative plus sombre en correspondance. Le pain 11 cuit s'est finalement sensiblement rigidifié lors de la cuisson faisant que le mets 6 est facilement manipulable bien qu'il contienne une garniture interne 30 toujours en sauce, la couche de protection de fromage 25 empêchant cette sauce de décomposer le pain.

Lors de la consommation, le consommateur a naturellement tendance à tenir le mets à l'oblique, et à l'entamer par le centre du bord supérieur en préservant des bords latéraux surélevés pour contenir la garniture 30 dans l'enveloppe 25 constituant une poche hermétique. Le risque de débordement de la sauce vers l'extérieur entraînant des taches sur les vêtements est ainsi fortement minimisé. Ce mets peut donc être dégusté en le tenant seulement d'une main, debout ou assis, voire au cours d'une activité telle que de lecture, ou de déplacement dans un transport en commun, ou de conduite d'un véhicule, et ce en toute sérénité. On apprécie alors le plaisir du goût élaboré d'une garniture 30 cuisinée, goût inhabituel dans ces circonstances de restauration rapide.

De nombreuses améliorations peuvent être apportées au mets selon l'invention. Notamment, la garniture 30 en sauce n'est nullement limitée aux exemples cités mais s'étend à toutes préparations liquides, par exemple, à base de crème, non susceptibles de dissoudre du fromage fondu. Le pain peut être réalisé de manière traditionnelle à partir de blé ou autres céréales, mais également à partir de nombreux autres féculents tels que le riz ou les pommes de terre.

La forme circulaire préférée pour le mets 6 est à considérer en correspondance avec des plaques chauffantes circulaires disponibles couramment dans le commerce. Toutefois, on peut parfaitement envisager de modifier la forme des plaques selon des figures triangulaires, carrées ou octogonales ; la forme du pain initial 10 étant alors adaptée en conséquence. Les épaisseurs citées à titre d'exemples peuvent être augmentées dès lors que la température ou la durée de cuisson est allongée en conséquence.

## Revendications

1. Mets de restauration rapide basé sur un pain (10) contenant une garniture (30), caractérisé en ce que les parois d'une cavité interne ménagée au centre du pain sont tapissées de fromage à pâte fondue (20,25) pour isoler de manière étanche une garniture humide logée dans cette cavité.

2. Mets selon la revendication 1, caractérisé en ce que le fromage à pâte fondue (20,25) est fabriqué dans la région de la Savoie sous la dénomination "Raclette".

3. Mets selon la revendication 1, caractérisé en ce que la garniture (30) est une spécialité avec une sauce, telle qu'un émincé de viande de poulet, d'agneau ou autres, un boeuf bourguignon ou une ratatouille ; est une choucroute cuite dans du vin blanc accompagnée de charcuterie ; ou est une purée de légumes et de viandes selon une recette mexicaine.

4. Procédé de fabrication d'un mets selon la revendication 1, caractérisé en ce qu'il comprend les étapes suivantes :
- découper un couvercle (12) dans la face supérieure d'un pain partiellement cuit (10), et ce en préservant un bord continu périphérique (14),
- ménager une cavité au centre du pain,
- déposer sur le fond et contre les bords latéraux de la cavité interne des lamelles de fromage à pâte fondue (20),
- remplir la cavité ainsi tapissée avec une garniture (30),
- couvrir de bord à bord le dessus de la garniture (30) avec des lamelles de fromage à pâte fondue (20), puis fermer le pain en replaçant le couvercle (12), et
- cuire le mets à une température comprise entre 130°C et 190°C pendant une durée comprise entre 2 et 6 minutes.

5. Procédé selon la revendication 4, caractérisé en ce que l'épaisseur respectivement du couvercle (12) et du fond de la cavité est comprise entre 5 à 15 millimètres de pain partiellement cuit.

6. Procédé selon la revendication 4, caractérisé en ce que les parois internes de la cavité et du couvercle sont préalablement enduites de beurre avant dépôt des lamelles de fromage à pâte fondue.

7. Procédé selon la revendication 4, caractérisé en ce que le pain (10) est circulaire, et en ce que la cuisson est réalisée entre deux plaques rondes chauffantes en contact avec le couvercle et le fond, et ce à une température comprise entre 150°C et 170°C pendant 2 à 5 minutes.
